# EUROPÄISCHE PATENTSCHRIFT

(11) **EP 2 085 638 B1**
(45) Veröffentlichungstag und Bekanntmachung des Hinweises auf die Patenterteilung: **11.05.2011**
(21) Anmeldenummer: 08021991.8
(22) Anmeldetag: 18.12.2008
(51) Int. Cl.: F16F 9/06

(54) **Gasdruckstoßdämpfer**
Gas pressure shock absorber
Amortisseur à gaz sous pression

(30) Priorität: 29.01.2008 DE 102008006476
(43) Veröffentlichungstag der Anmeldung: 05.08.2009
(73) Patentinhaber: ThyssenKrupp Bilstein Suspension GmbH, 58256 Ennepetal (DE)
(72) Erfinder: Fritz, Michael Dipl.-Ing., 58339 Breckerfeld (DE)
(74) Vertreter: Adams, Steffen

(56) Entgegenhaltungen:
- EP-A- 1 314 586
- DE-A1- 3 005 830
- DE-A1- 10 336 779
- JP-A- 4 090 917

## Beschreibung

Die Erfindung betrifft einen Gasdruckstoßdämpfer für Fahrzeugfahrwerke gemäß dem Oberbegriff des Patentanspruchs 1. Die Erfindung betrifft auch ein Federbein für Fahrzeugfahrwerke mit einer Fahrzeugtragfeder aus Stahl und einem Gasdruckstoßdämpfer.

Derartige Gasdruckstoßdämpfer sind seit langer Zeit bekannt. Auch ist bekannt, bei solchen Gasdruckstoßdämpfern Einrichtungen vorzusehen, die eine Niveaueinstellung des Schwingungsdämpfers ermöglichen. So ist beispielsweise aus der Offenlegungsschrift DE 30 05 830 A1 ein Zweirohrschwingungsdämpfer bekannt, der eine Einrichtung zur Niveaueinstellung aufweist. Hierzu ist vorgesehen, dass ein von außen betätigbares Ventil in einen Strömungsweg zwischen dem Arbeitsraum des Schwingungsdämpfers und dem Kolbenstangenhohlraum angeordnet ist. Beim Einbau der Federbeine in das Fahrzeug braucht dann nur durch Betätigung dieses Ventils eine Niveaueinstellung von außen vorgenommen zu werden. Diese Niveaueinstellung kann gemäß DE 30 05 830 A1 grundsätzlich auf zwei unterschiedliche Arten erfolgen. Entweder besitzt der Schwingungsdämpfer bereits vor der Montage in das Fahrzeug eine Gasdruckfüllung, und die benötigte Niveauhöhe wird nach dem Einbau des Dämpfers in das Fahrzeug durch eine durch Öffnen des Ventils mittels eines entsprechenden Montagestabs herbeigeführte Drucksenkung reguliert. Oder der Schwingungsdämpfer besitzt im angelieferten Zustand vor der Montage keine Druckgasfüllung und wird bei der Montage zur Erzielung der gewünschten Niveaulage mit einer entsprechenden Druckgasfüllung versehen, wozu das Ventil pneumatisch durch das einzufüllende Druckgas selbst geöffnet wird.

Die in der DE 30 05 830 A1 offenbarte Lösung dient dazu, bei Federbeinen mit Tragfedern aus Stahl die aufwändige Klassifizierung, Kennzeichnung und Lagerhaltung der Tragfedern zu vermeiden. Diese aufwändige Klassifizierung, Kennzeichnung und Lagerhaltung der Tragfedern ist bei dem Stand der Technik, von dem die DE 30 05 830 A1 ausgeht, deswegen erforderlich, weil aus fertigungstechnischen Gründen die Tragfedern relativ große Kraft- und Bautoleranzen aufweisen, die zu unterschiedlichen Niveaueinstellungen führen können. Die in der DE 30 05 830 A1 dargestellte Lösung soll dazu führen, dass auch Tragfedern aus Stahl mit sehr unterschiedlichen Kennwerten bzw. Abmessungen an ein und demselben Fahrzeug bzw. an ein und derselben Achse eines Fahrzeugs verwendet werden können, und dass trotzdem ein einheitliches Fahrzeugniveau eingestellt werden kann.

Nachteilig bei der aus der DE 30 05 830 A1 bekannten Lösung ist, dass mit der dort beschriebenen Einrichtung zur Niveaueinstellung lediglich einmalig, nämlich beim Einbau der Federbeine in das Fahrzeug, eine Niveaueinstellung erfolgen kann. Für eine wiederholte Veränderung des Fahrzeugniveaus, die im Bedarfsfall vom Fahrzeugführer herbeigeführt wird und beliebig oft wiederholbar ist, ist die bekannte Einstellung zur Niveaueinstellung nicht geeignet. Außerdem kann bei der Niveauregulierung durch Einleitung von Druckgas in das Dämpferrohr bei der aus der DE 30 05 830 A1 bekannten Niveauregulierungseinrichtung nur eine Veränderung des Fahrzeugniveaus in eine Richtung erfolgen. Denn durch die Einleitung von Druckgas über das zwischen dem Kolbenstangenhohlraum und einem mit Dämpfungsflüssigkeit gefüllten Arbeitsraum kann lediglich eine Anhebung des Fahrzeugniveaus herbeigeführt werden. Eine Absenkung des Fahrzeugniveaus ist dagegen nicht möglich.

In der Praxis gibt es Fahrsituationen, in denen es erforderlich ist, das Fahrzeugniveau insgesamt (d.h. auf beiden Fahrzeugachsen) oder teilweise (z.B. nur auf der vorderen oder nur auf der hinteren Fahrzeugachse) anzuheben. Als Beispiel für eine derartige Fahrsituation sei das Überfahren einer Bodenwelle (z.B. eines so genannten "sleeping policeman") mit einem Fahrzeug genannt, das einen Frontspoiler aufweist. In diesem Fall kann es erforderlich sein, das Fahrzeugniveau z.B. an der Vorderachse kurzzeitig anzuheben, um die Bodenwelle überfahren zu können, ohne den Spoiler zu beschädigen, und anschließend das ursprüngliche Fahrzeugniveau wieder herzustellen. Auch bei stark tiefer gelegten Fahrzeugen kann dies erforderlich sein. Dieses Erfordernis tritt daher insbesondere bei Sportwagen auf, die von Haus aus einen geringen Abstand des Fahrzeugaufbaus von der Fahrbahn und häufig auch Frontspoiler aufweisen. Das aus der DE 30 05 830 A1 bekannte Federbein kann die vorgenannten Anforderungen aus den bereits dargelegten Gründen nicht erfüllen.

Des Weiteren sind Niveauregulierungseinrichtungen für Fahrzeuge bekannt, bei denen die Fahrzeugtragfedern als Luftfedern ausgebildet sind (vgl. z.B. DE 103 36 779 A1). Aus dieser Druckschrift ist eine pneumatische Höhenverstelleinrichtung für Kraftfahrzeuge bekannt, bei der ein zylinder- oder balgartiger Druckkörper mit einer aus flexiblem Material gebildeten Außenwand vorhanden ist. Der Druckkörper kann durch einen Luftanschluss mit Druckluft beaufschlagt werden, sodass er sich längs einer bevorzugten Ausdehnungsrichtung ausdehnt und dadurch das Fahrzeugniveau angehoben wird. Die Einsatzmöglichkeiten dieser sowie aller anderen Niveauregulierungseinrichtungen, die mit als Luftfedern ausgebildeten Tragfedern zusammenwirken, sind auf Fahrzeuge mit Luftfedern beschränkt. Sie können bei Federbeinen mit Fahrzeugtragfedern aus Stahl nicht eingesetzt werden.

Der Erfindung liegt die Aufgabe zugrunde, einen Gasdruckstoßdämpfer und ein Federbein mit einer Fahrzeugtragfeder aus Stahl für Fahrzeugfahrwerke nach dem Oberbegriff des Patentanspruchs 1 bzw. des Patentanspruchs 4 zur Verfügung zu stellen, bei dem die Einstellung des Fahrzeugniveaus beliebig oft und in beide Richtungen erfolgen kann, d.h. das Fahrzeugniveau soll innerhalb vorgegebener Grenzen angehoben oder abgesenkt werden können, wann immer eine entsprechende Niveaueinstellung erwünscht ist.

Diese Aufgabe wird gelöst durch einen Gasdruckstoßdämpfer mit den Merkmalen des Patentanspruchs 1. Vorteilhafte Weiterbildungen sind in den entsprechenden Unteransprüchen angegeben. Außerdem wird die vorstehende Aufgabe durch ein Federbein für ein Fahrzeugfahrwerk mit den Merkmalen des Patentanspruchs 5 gelöst.

Bei dem erfindungsgemäßen Gasdruckstoßdämpfer bzw. Federbein weist die Einrichtung zur Regulierung des Fahrzeugniveaus einen separaten Behälter auf, dessen Innenraum von einem verschiebbaren Trennkolben in einen ersten, mit Dämpfungsflüssigkeit gefüllten Teilraum und einen zweiten, mit Gas befüllbaren Teilraum aufgeteilt wird, wobei der erste Teilraum mit dem ersten, die Dämpfungsflüssigkeit des Stoßdämpfers beinhaltenden Teilvolumen des Dämpferrohres verbunden und der zweite Teilraum an eine Druckgasquelle angeschlossen ist. Daher kann mit dem erfindungsgemäßen Gasdruckstoßdämpfer eine wirksame Höhenstandseinstellung (Niveauregulierung) des Fahrzeugaufbaus an einem mittels Tragfedern aus Stahl gefederten Fahrzeug erfolgen, um z.B. über Fahrbahnerhöhungen hinweg fahren zu können, und anschließend kann das ursprüngliche Fahrzeugniveau wiederhergestellt werden. Das Fahrzeugniveau wird durch Einleiten von Druckgas in den zweiten Teilraum des separaten Behälters angehoben und durch Ablassen von Druckgas wieder abgesenkt. Dies kann beliebig oft hintereinander erfolgen. Dieser Vorgang wird nachfolgend genauer beschrieben.

Erfindungsgemäß wird an dem Stoßdämpfer bzw. dem Federbein ein zusätzlicher, separater Behälter angeordnet, dessen Innenraum von einem verschiebbaren Trennkolben in zwei Teilräume aufgeteilt wird. Einerseits ist der zusätzliche Behälter mit einem der Teilräume über eine Druckgasleitung an einen Druckgasraum angeschlossen, sodass Druckgas in diesen Teilraum eingeleitet werden kann. Andererseits ist der andere, mit Dämpfungsflüssigkeit gefüllte Teilraum des separaten Behälters hydraulisch mit dem Teilvolumen des Dämpferrohrinnenraumes verbunden, in dem sich die Dämpfungsflüssigkeit befindet.

Wird Druckgas in den mit Gas befüllbaren Teilraum des separaten Behälters eingeleitet, so wird die sich in dem anderen Teilraum befindende Dämpfungsflüssigkeit von dem verschiebbaren Trennkolben aus dem separaten Behälter heraus- und in das Innere des Dämpferrohres des Gasdruckstoßdämpfers hineingedrückt. Dadurch steigt das Volumen der Dämpfungsflüssigkeit im Inneren des Dämpferrohres an, und das Volumen des in dem Gasdruckstoßdämpfer vorhandenen Gasraums wird dadurch entsprechend verkleinert. Der Druck in dem verkleinerten Gasraum ist dann größer als der Druck, der in dem ursprünglich größeren Gasraum vor der Einleitung von Druckgas in den separaten Behälter vorhanden war. Durch diese Erhöhung des Druckes in dem im Innenraum des Dämpferrohres befindlichen Druckgaspolster wird die Kolbenstange aus dem Innenraum des Dämpferrohres herausgedrückt und das Fahrzeugniveau wird dementsprechend angehoben.

Gleichzeitig ist in dem mit Druckgas befüllten Teilraum des separaten Behälters nun ein zusätzliches Gaspolster vorhanden, welches teilweise die Funktion des in dem Innenraum des Dämpferrohres vorhandenen Gasraums mit übernimmt, d.h. sowohl der Gasraum im Inneren des Dämpferrohres als auch der Gasraum in dem separaten Behälter dienen zum Ausgleichen des Kolbenstangenvolumens, das bei Kolbenstangenbewegungen in den Innenraum des Stoßdämpfers hinein- oder aus diesem herausfährt.

Durch ein Ablassen des Druckgases aus dem Teilraum des separaten Behälters kann das Fahrzeugniveau wieder gezielt abgesenkt werden. Wird das gesamte Druckgas aus dem separaten Behälter wieder abgelassen, so nimmt der Trennkolben in dem Behälter seine ursprüngliche Ausgangsstellung wieder ein und der ursprüngliche Zustand in dem Gasdruckstoßdämpfer ist wieder hergestellt. D.h. der Gasdruckstoßdämpfer weist dann wieder ein Gaspolster mit dem ursprünglichen Volumen und dem ursprünglichen Druck auf und das ursprüngliche Dämpfungsflüssigkeitsvolumen ist wieder vorhanden, sodass auch das ursprüngliche Fahrzeugniveau wieder hergestellt ist, das vor der Einleitung von Druckgas in den separaten Behälter vorhanden war.

Auf diese Weise lässt sich beliebig oft das Fahrzeugniveau anheben oder absenken. Die Grenzen, in denen eine Regulierung des Fahrzeugniveaus möglich ist, werden durch das Volumen des separaten Behälters und durch das Volumen des Innenraumes des Dämpferrohres festgelegt.

Die erfindungsgemäße Niveauregulierungseinrichtung kann sowohl bei Stoßdämpfern eingesetzt werden, die nach dem Einrohr-Wirkprinzip arbeiten, als auch bei solchen, die nach dem Zweirohr-Wirkprinzip arbeiten.

Aus Kostengründen bietet es sich an, als Druckgas Luft zu verwenden, jedoch sind auch andere Gase für die Verwendung in der erfindungsgemäßen Niveauregulierungseinrichtung grundsätzlich einsetzbar. Im Fall von Luft kann die Druckgasquelle als mit Luft gefüllter Druckbehälter ausgebildet sein, der an einen von dem Motor des Kraftfahrzeuges angetriebenen Kompressor angeschlossen ist und von diesem mit Druckluft befüllt wird.

Im Folgenden wird die Erfindung anhand einer Zeichnung näher erläutert. Im Einzelnen zeigen
- Fig. 1a: einen Gasdruckstoßdämpfer nach dem Zweirohr-Wirkprinzip in einer ersten Betriebsstellung;
- Fig. 1b: den Gasdruckstoßdämpfer nach Fig. 1a in einer zweiten Betriebsstel- lung;
- Fig. 2a: einen Gasdruckstoßdämpfer nach dem Einrohr-Wirkprinzip in einer ersten Betriebsstellung;
- Fig. 2b: den Gasdruckstoßdämpfer nach Fig. 2a in einer zweiten Betriebsstel- lung.

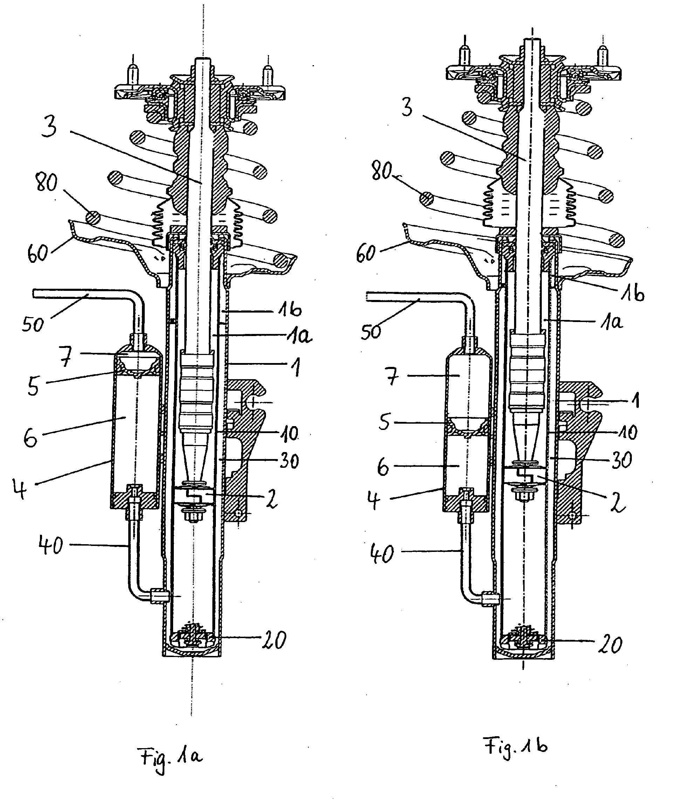

In Fig. 1a ist ein erfindungsgemäßer Gasdruckstoßdämpfer dargestellt, der nach dem Zweirohr-Wirkprinzip arbeitet. Diese Stoßdämpfer werden abgekürzt in der Fachsprache auch als Zweirohrdämpfer bezeichnet. Im Inneren des Dämpferrohres 1 ist ein Innenrohr 10 angeordnet, in welchem der Arbeitskolben 2 hin und her bewegbar am Ende einer Kolbenstange 3 angeordnet ist. Der Innenraum des Innenrohres 10 ist mit Dämpfungsflüssigkeit gefüllt. Am unteren Ende des Innenrohres 10 ist ein Bodenventil 20 angeordnet, durch das Dämpfungsflüssigkeit in den zwischen dem Innenrohr 10 und dem Dämpferrohr 1 gebildeten Ringraum 30 strömen kann. Der Ringraum 30 dient zur Aufnahme des Dämpfungsflüssigkeitsvolumens, das durch das in den Innenraum des Innenrohres 10 eindringende Kolbenstangenvolumen verdrängt wird. In dem Ringraum 30 ist über dem mit Dämpfungsflüssigkeit gefüllten Bereich ein Gasbereich (Gaspolster) vorhanden, der mit Druckgas gefüllt ist.

Neben dem Dämpferrohr 1 des Stoßdämpfers ist ein separater Behälter 4 angeordnet. In dem in Fig. 1a dargestellten Ausführungsbeispiel ist der Behälter 4 fest mit dem Dämpferrohr 1 verbunden. Dies ist im Rahmen der vorliegenden Erfindung jedoch nicht zwingend erforderlich. Der separate Behälter 4 könnte auch an einem anderen Bauteil befestigt sein.

Der separate Behälter 4 weist einen Innenraum auf, der durch einen verschiebbaren Trennkolben 5 in einen mit Druckgas befüllbaren Teilraum 7 und einen mit Dämpfungsflüssigkeit gefüllten Teilraum 6 aufgeteilt ist. Der mit Dämpfungsflüssigkeit gefüllte Teilraum 6 ist über eine Hydraulikleitung 40 an den Teil des Ringraums 30 angeschlossen, in dem sich die Dämpfungsflüssigkeit des Gasdruckstoßdämpfers befindet. Der mit Druckgas befüllbare Teilraum 7 ist über eine Druckgasleitung 50 an eine in Fig. 1a nicht dargestellte Druckgasquelle angeschlossen. Über die Druckgasleitung 50 kann Druckgas in den Teilraum 7 eingeleitet werden, wodurch der Trennkolben 5 innerhalb des Behälters 4 verschoben wird.

Der Trennkolben 5 ist an seinem Umfang gegenüber der Innenwand des Behälters 4 über eine als einfache O-Ring-Dichtung ausgebildete Dichtung gasdicht und flüssigkeitsdicht abgedichtet.

Eine Verschiebung des Trennkolbens 5 innerhalb des Behälters 4 bewirkt, dass Dämpfungsflüssigkeit aus dem Teilraum 6 durch den Trennkolben 5 hinausgedrückt wird und über die Hydraulikleitung 40 in den zwischen dem Innenrohr 10 und dem Dämpferrohr 1 gebildeten Ringraum 30 eingeleitet wird. Dadurch steigt das Dämpfungsflüssigkeitsvolumen im Ringraum 30 des Gasdruckstoßdämpfers an, und das Volumen des in dem Ringraum 30 angeordneten Gaspolsters wird entsprechend verkleinert, wodurch wiederum der Druck innerhalb des Gaspolsters ansteigt. Aufgrund des erhöhten Druckes wirkt eine größere Kraft über die im Wesentlichen inkompressible Dämpfungsflüssigkeit auf die von der Kolbenstange 3 abgewandte Seite des Arbeitskolbens 2, sodass die Kolbenstange weiter aus dem Dämpferrohr 1 herausgedrückt wird. Dadurch wird das Fahrzeugniveau angehoben, denn das dem Arbeitskolben 2 abgewandte Ende der Kolbenstange 3 ist mit dem Fahrzeugaufbau verbunden.

In Fig. 1b ist eine Betriebsstellung des erfindungsgemäßen Gasdruckstoßdämpfers dargestellt, bei der der Trennkolben 5 etwa die Hälfte des ihm innerhalb des Behälters 4 zur Verfügung stehenden Verschiebeweges zurückgelegt hat. In dem Maße, in dem sich durch die Verschiebung des Trennkolbens 5 das Volumen des die Dämpfungsflüssigkeit aufnehmenden Teilraumes 6 verkleinert hat, hat das Volumen der Dämpfungsflüssigkeit in dem Ringraum 30 des Gasdruckstoßdämpfers zugenommen. In Fig. 1b ist gut erkennbar, dass die Phasengrenze zwischen Dämpfungsflüssigkeit und Gaspolster deutlich angestiegen ist. Das Volumen des Gaspolsters ist erheblich kleiner als in der Betriebsstellung gemäß Fig. 1a, und der Druck innerhalb des Gaspolsters ist entsprechend deutlich höher als in dem Gaspolster gemäß Fig. 1a. Daher wirkt eine größere Kraft auf die der Kolbenstange 3 abgewandte Seite des Arbeitskolbens 2, und die Kolbenstange 3 ist gegenüber der in Fig. 1a dargestellten Betriebsstellung weiter aus dem Inneren des Dämpferrohres 1 herausgedrückt. Bei der in Fig. 1b dargestellten Betriebsstellung hat der Fahrzeugaufbau somit ein höheres Niveau, d.h. einen größeren Abstand von der Fahrbahnoberfläche als in der Betriebsstellung gemäß Fig. 1a.

Bei dem beschriebenen System bleibt die Funktion des Stoßdämpfers voll erhalten, denn der Teilraum 7 übernimmt die Funktion des kleiner werdenden Gasraums 1b im Stoßdämpfer.

Um das Fahrzeugniveau wieder abzusenken, wird das Druckgas aus dem Teilraum 7 wieder herausgelassen. Damit dies möglich ist, kann z.B. in der Druckgasleitung 50 zwischen der in den Figuren nicht dargestellten Druckgasquelle und dem Behälter 4 ein geeignetes Ventil (z.B. ein 2/3-WegeVentil, ebenfalls nicht dargestellt) angeordnet sein, über das Druckgas abgelassen werden kann. Es kann sinnvoll sein, auch einen Schalldämpfer für das abgelassene Druckgas vorzusehen, um die Geräuschentwicklung einzudämmen.

In den Fig. 1a und 1b ist der Federteller 60 dargestellt, der sich auf dem Dämpferrohr 1 abstützt und der seinerseits die als Stahlschraubenfeder 80 ausgebildete Fahrzeugtragfeder des Federbeins abstützt. Die Kolbenstange 3 ist mit ihrem vom Arbeitskolben 2 abgewandten Ende in bekannter Weise über ein Aufnahmelager einer Federbeinaufnahme an den Fahrzeugaufbau angebunden.

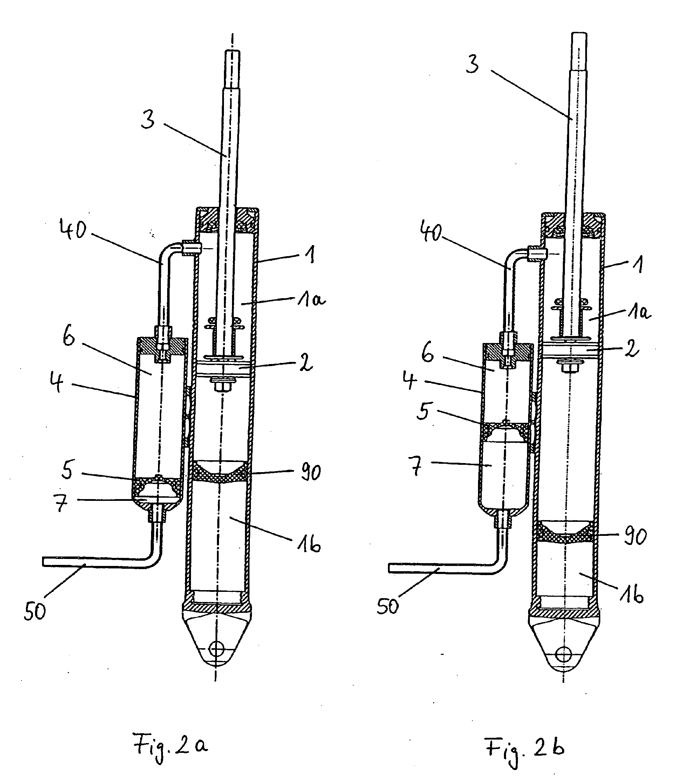

In Fig. 2a ist ein Gasdruckstoßdämpfer dargestellt, der nach dem so genannten Einrohr-Wirkprinzip arbeitet. Derartige Gasdruckstoßdämpfer werden in der Fachsprache auch abgekürzt als Einrohrdämpfer bezeichnet. Gleiche Bauteile sind mit denselben Bezugszeichen bezeichnet wie in den Fig. 1a, 1b. Im Unterschied zu den Fig. 1a, 1b ist in den Fig. 2a, 2b lediglich der Gasdruckstoßdämpfer mit dem separaten Behälter 4 dargestellt. Der Federteller, die Fahrzeugtragfeder und die Anbindung der Kolbenstange an den Fahrzeugaufbau sind dagegen weggelassen worden.

Im Inneren des Dämpferrohres 1 ist ein erstes Teilvolumen 1a vorhanden, welches mit Dämpfungsflüssigkeit gefüllt ist. Innerhalb des Teilvolumens 1a ist ein Teil der Kolbenstange 3 mit dem an ihrem Ende angeordneten Arbeitskolben 2 angeordnet. Der Arbeitskolben 2 kann sich innerhalb des mit Dämpfungsflüssigkeit gefüllten ersten Teilvolumens 1a hin und her bewegen.

Das Dämpferrohr 1 umschließt darüber hinaus auch ein mit Druckgas befülltes Teilvolumen 1b. Das mit Druckgas befüllte Teilvolumen 1b ist über einen Trennkolben 90 von dem mit Dämpfungsflüssigkeit gefüllten Teilvolumen 1a abgetrennt. Das Gaspolster in dem Teilvolumen 1b dient dem Ausgleich des in das Dämpferrohr 1 eintretenden bzw. aus dem Dämpferrohr 1 austretenden Kolbenstangenvolumens bei einer Ein- bzw. Ausfahrbewegung der Kolbenstange 3.

Analog zu dem in den Fig. 1a und 1b dargestellten Ausführungsbeispiel ist ein separater Behälter 4 vorgesehen, dessen Innenraum von einem Trennkolben 5 in zwei Teilräume 6, 7 unterteilt wird. Ein erster Teilraum 6 ist mit Dämpfungsflüssigkeit gefüllt, während ein zweiter Teilraum 7 mit Druckgas befüllbar ist. Analog zu dem in den Fig. 1a und 1b dargestellten Ausführungsbeispiel ist der mit Druckgas befüllbare Teilraum 7 an eine in den Fig. 2a und 2b nicht dargestellte Druckgasquelle über eine Druckgasleitung 50 angeschlossen. Der mit Dämpfungsflüssigkeit gefüllte Teilraum 6 des Behälters 4 ist über die Hydraulikleitung 40 an das Teilvolumen 1a des Dämpferrohres 1 angeschlossen, welches mit Dämpfungsflüssigkeit gefüllt ist.

Die Wirkungsweise der Niveauregulierungseinrichtung gemäß den Fig. 2a und 2b ist die gleiche wie bei dem zuvor beschriebenen Ausführungsbeispiel gemäß den Fig. 1a und 1b. Der Unterschied besteht darin, dass das aus dem Behälter 4 über den Trennkolben 5 herausgedrückte Dämpfungsflüssigkeitsvolumen nicht in einen Ringraum, sondern direkt in den kolbenstangenseitigen Arbeitsraum des Einrohrdämpfers eingeleitet wird. Dadurch erhöht sich das Volumen der Dämpfungsflüssigkeit in dem Teilvolumen 1 a des Dämpferrohres 1, und der in dem Dämpferrohr 1 angeordnete Trennkolben 90 wird nach unten verschoben, sodass sich das Gaspolster in dem Teilvolumen 1b des Dämpferrohres 1 verkleinert. Dadurch erhöht sich der Druck innerhalb des Gaspolsters, und es wirkt ein erhöhter Druck über die inkompressible Dämpfungsflüssigkeit auf die von der Kolbenstange 3 abgewandte Seite des Arbeitskolbens 2, wodurch die Kolbenstange 3 weiter aus dem Dämpferrohr 1 herausgedrückt wird als in der Betriebsstellung gemäß Fig. 2a dargestellt.

In Fig. 2b ist eine Betriebsstellung dargestellt, die der Betriebsstellung gemäß Fig. 1b entspricht. Der Trennkolben 5 hat innerhalb des Behälters 4 etwa die Hälfte des ihm zur Verfügung stehenden Verschiebeweges zurückgelegt, und die in dem Teilraum 6 noch vorhandene Dämpfungsflüssigkeit entspricht nur noch etwa der Hälfte der Dämpfungsflüssigkeit, die in dem Teilraum 6 in der Betriebsstellung gemäß Fig. 2a vorhanden ist. Die Dämpfungsflüssigkeitsmenge, die bei der in Fig. 2b dargestellten Betriebsstellung nicht mehr in dem Behälter 4 vorhanden ist, befindet sich nun in dem mit Dämpfungsflüssigkeit gefüllten Teilvolumen 1a des Dämpferrohres 1, und das Gaspolster in dem Teilvolumen 1b des Dämpferrohres 1 ist gegenüber der in Fig. 2a dargestellten Betriebsstellung deutlich verkleinert, sodass der Druck innerhalb des Gaspolsters deutlich höher ist als in der Betriebsstellung gemäß Fig. 2a.

Theoretisch wäre es auch denkbar, bei einem Einrohrdämpfer wie dem in den Fig. 2a und 2b dargestellten die Niveauveränderung dadurch zu erzeugen, dass auf direktem Wege Druckgas in das Gaspolster in dem Teilvolumen 1b eingeleitet wird. In der Praxis erweist sich dies jedoch nicht als der richtige Weg, weil damit größere Probleme verbunden wären. Denn es müsste in jedem Fall beim Ablassen des Druckgases sichergestellt werden, dass der erforderliche Mindestdruck im Dämpfergasraum (Teilvolumen 1b) zur Aufrechterhaltung der Dämpffunktion erhalten bleibt. Der große Vorteil der vorliegenden Erfindung besteht unter anderem darin, dass sowohl bei Einrohr- als auch bei Zweirohrdämpfern, die mit einer Werksbefüllung von Druckgas und Dämpfungsflüssigkeit ausgestattet sind, die Niveauregulierung nach oben und nach unten auf einfache Weise durch das Einleiten von Druckgas realisiert werden kann, ohne dass die Gefahr besteht, dass die durch die Werksfüllung eingestellten Eigenschaften des Schwingungsdämpfers verändert werden. Insbesondere kann bei Einrohrdämpfern der erforderliche Mindestdruck des Dämpfergasraumes nicht unterschritten werden.

## Patentansprüche

1. Gasdruckstoßdämpfer für Fahrzeugfahrwerke mit einem Dämpferrohr (1) und einer einen Arbeitskolben (2) tragenden Kolbenstange (3), welche im Dämpferrohr (1) hin und her bewegbar angeordnet ist, wobei ein erstes Teilvolumen (1a) des Innenraums des Dämpferrohres (1) mit einer Dämpfungsflüssigkeit und ein zweites Teilvolumen (1b) des Innenraums des Dämpferrohres (1) mit einem Gas befüllbar ist, und wobei der Gasdruckstoßdämpfer eine Einrichtung zur Regulierung des Fahrzeugniveaus aufweist, die durch das Einleiten eines unter Druck stehenden Gases betätigt wird, **dadurch gekennzeichnet, dass** die Einrichtung zur Regulierung des Fahrzeugniveaus einen separaten Behälter (4) aufweist, dessen Innenraum von einem verschiebbaren Trennkolben (5) in einen ersten, mit Dämpfungsflüssigkeit gefüllten Teilraum (6) und einen zweiten, mit Gas befüllbaren Teilraum (7) aufgeteilt wird, wobei der erste Teilraum (6) mit dem ersten Teilvolumen (1a) des Dämpferrohres (1) verbunden und der zweite Teilraum (7) an eine Druckgasquelle angeschlossen ist, derart, dass durch Einleitung von Druckgas in den oder Ablassen von Druckgas aus dem zweiten Teilraum (7) des Behälters (4) der Gasdruck in dem zweiten Teilvolumen (1b) des Dämpferrohres (1) und damit das Fahrzeugniveau anhebbar oder absenkbar ist.

2. Gasdruckstoßdämpfer nach Anspruch 1, **dadurch gekennzeichnet, dass** der Trennkolben an seinem Umfang gegenüber der Innenwand des Behälters (4) abgedichtet ist.

3. Gasdruckstoßdämpfer nach Anspruch 1 oder 2, **dadurch gekennzeichnet, dass** der Behälter (4) an dem Dämpferrohr (1) befestigt ist.

4. Gasdruckstoßdämpfer nach einem der Ansprüche 1 bis 3, **dadurch gekennzeichnet, dass** die Einrichtung zur Regulierung des Fahrzeugniveaus Mittel umfasst, durch die Druckgas aus dem separaten Behälter (4) abgelassen werden kann.

5. Federbein für ein Fahrzeugfahrwerk mit einer Fahrzeugtragfeder aus Stahl und mit einem Gasdruckstoßdämpfer, der ein Dämpferrohr (1) und eine einen Arbeitskolben (2) tragenden Kolbenstange (3) umfasst, welche im Dämpferrohr (1) hin und her bewegbar angeordnet ist, wobei ein erstes Teilvolumen (1a) des Innenraums des Dämpferrohres (1) mit einer Dämpfungsflüssigkeit und ein zweites Teilvolumen (1b) des Innenraums des Dämpferrohres (1) mit einem Gas befüllbar ist, und wobei der Gasdruckstoßdämpfer eine Einrichtung zur Regulierung des Fahrzeugniveaus aufweist, die durch das Einleiten eines unter Druck stehenden Gases betätigt wird, **dadurch gekennzeichnet, dass** die Einrichtung zur Regulierung des Fahrzeugniveaus einen separaten Behälter (4) aufweist, dessen Innenraum von einem verschiebbaren Trennkolben (5) in einen ersten, mit Dämpfungsflüssigkeit gefüllten Teilraum (6) und einen zweiten, mit Gas befüllbaren Teilraum (7) aufgeteilt wird, wobei der erste Teilraum (6) mit dem ersten Teilvolumen (1a) des Dämpferrohres (1) verbunden und der zweite Teilraum (7) an eine Druckgasquelle angeschlossen ist, derart, dass durch Einleitung von Druckgas in den oder Ablassen von Druckgas aus dem zweiten Teilraum (7) des Behälters (4) der Gasdruck in dem zweiten Teilvolumen (1b) des Dämpferrohres (1) und damit das Fahrzeugniveau anhebbar oder absenkbar ist.

6. Federbein nach Anspruch 5, **dadurch gekennzeichnet, dass** der Trennkolben an seinem Umfang gegenüber der Innenwand des Behälters (4) abgedichtet ist.

7. Federbein nach Anspruch 5 oder 6, **dadurch gekennzeichnet, dass** der Behälter (4) an dem Dämpferrohr (1) befestigt ist.

8. Federbein nach einem der Ansprüche 5 bis 7, **dadurch gekennzeichnet, dass** die Einrichtung zur Regulierung des Fahrzeugniveaus Mittel umfasst, durch die Druckgas aus dem separaten Behälter (4) abgelassen werden kann.

## Claims

1. Gas pressure shock absorber for vehicle chassis having a damper pipe (1) and a piston rod (3) supporting a working piston (2), which piston rod is disposed in a reciprocatingly moveable manner in the damper pipe (1), wherein a first partial volume (1a) of the inner chamber of the damper pipe (1) can be filled with a damping fluid and a second partial volume (1b) of the inner chamber of the damper pipe (1) can be filled with a gas, and wherein the gas pressure shock absorber has a device for regulating the vehicle level, which can be actuated by the introduction of a compressed gas, **characterised in that** the device for regulating the vehicle level has a separate vessel (4), the inner chamber of which is divided by a displaceable separating piston (5) into a first partial chamber (6) filled with damping fluid and a second partial chamber (7) which can be filled with gas, wherein the first partial chamber (6) is connected to the first partial volume (1a) of the damper pipe (1) and the second partial chamber (7) is connected to a source of compressed gas in such a way that, by introducing compressed gas into the second partial chamber (7) of the vessel (4) or letting compressed gas out of the second partial chamber (7) of the vessel (4), the gas pressure in the second partial volume (1b) of the damper pipe (1) and therefore the vehicle level can be raised or can be lowered.

2. Gas pressure shock absorber as claimed in claim 1, **characterised in that** the separating piston is sealed at its periphery with respect to the inner wall of the vessel (4).

3. Gas pressure shock absorber as claimed in claim 1 or 2, **characterised in that** the vessel (4) is attached to the damper pipe (1).

4. Gas pressure shock absorber as claimed in any one of claims 1 to 3, **characterised in that** the device for regulating the vehicle level has means through which compressed gas can be let out of the separate vessel (4).

5. Spring leg for a vehicle chassis having a vehicle suspension spring made from steel and having a gas pressure shock absorber which has a damper pipe (1) and a piston rod (3) supporting a working piston (2), which piston rod is disposed in a reciprocatingly moveable manner in the damper pipe (1), wherein a first partial volume (1a) of the inner chamber of the damper pipe (1) can be filled with a damping fluid and a second partial volume (1b) of the inner chamber of the damper pipe (1) can be filled with a gas, and wherein the gas pressure shock absorber has a device for regulating the vehicle level, which can be actuated by the introduction of a compressed gas, **characterised in that** the device for regulating the vehicle level has a separate vessel (4), the inner chamber of which is divided by a displaceable separating piston (5) into a first partial chamber (6) filled with damping fluid and a second partial chamber (7) which can be filled with gas, wherein the first partial chamber (6) is connected to the first partial volume (1a) of the damper pipe (1) and the second partial chamber (7) is connected to a source of compressed gas in such a way that, by introducing compressed gas into the second partial chamber (7) of the vessel (4) or letting compressed gas out of the second partial chamber (7) of the vessel (4), the gas pressure in the second partial volume (1b) of the damper pipe (1) and therefore the vehicle level can be raised or can be lowered.

6. Spring leg as claimed in claim 5, **characterised in that** the separating piston is sealed at its periphery with respect to the inner wall of the vessel (4).

7. Spring leg as claimed in claim 5 or 6, **characterised in that** the vessel (4) is attached to the damper pipe (1).

8. Spring leg as claimed in any one of claims 5 to 7, **characterised in that** the device for regulating the vehicle level has means through which compressed gas can be let out of the separate vessel (4).

## Revendications

1. Amortisseur à gaz sous pression pour mécanisme de roulement de véhicule automobile avec un tube amortisseur (1) et une tige de piston (3), qui, portant un piston de travail (2), est disposée, mobile en va-et-vient, dans le tube amortisseur (1), sachant qu'un premier volume partiel (1a) de l'espace intérieur du tube amortisseur (1) peut être rempli avec un liquide d'amortissement et qu'un deuxième volume partiel (1b) de l'espace intérieur du tube amortisseur (1) peut être rempli avec un gaz, et sachant que ledit amortisseur à gaz sous pression est doté d'un système de régulation du niveau du véhicule automobile, qui est actionné par un gaz sous pression, **caractérisé en ce que** le système de régulation du niveau du véhicule automobile est doté d'un conteneur (4) séparé, dont l'espace intérieur est divisé par un piston de séparation (5) déplaçable, en un premier espace partiel (6), qui peut être rempli de liquide d'amortissement, et en un deuxième espace partiel (7), qui peut être rempli de gaz, le premier espace partiel (6) étant relié au premier volume partiel (1a) du tube amortisseur (1) et le deuxième espace partiel (7) étant raccordé à une source de gaz sous pression de sorte que, par amenée ou évacuation du gaz sous pression dans, respectivement hors du deuxième espace partiel (7) du conteneur (4), le gaz sous pression puisse monter ou descendre dans le deuxième volume partiel (1b) du tube amortisseur (1), et que, de ce fait, le niveau du véhicule automobile puisse être élevé ou abaissé.

2. Amortisseur à gaz sous pression selon la revendication 1, **caractérisé en ce que** le piston de séparation est étanchéifié, sur sa périphérie, par rapport à la paroi intérieure du conteneur (4).

3. Amortisseur à gaz sous pression selon la revendication 1 ou 2, **caractérisé en ce que** le conteneur (4) est fixé sur le tube amortisseur (1).

4. Amortisseur à gaz sous pression selon l'une des revendications 1 à 3, **caractérisé en ce que** le système de régulation du niveau du véhicule automobile comprend des moyens, qui permettent d'évacuer du gaz sous pression hors du conteneur (4) séparé.

5. Jambe de force à ressort pour un véhicule automobile, avec un ressort de suspension de véhicule automobile en acier et avec un amortisseur à gaz sous pression, qui comprend un tube amortisseur (1) et une tige de piston (3), qui, portant un piston de travail (2), est disposée, mobile en va-et-vient, dans le tube amortisseur (1), sachant qu'un premier volume partiel (1a) de l'espace intérieur du tube amortisseur (1) peut être rempli avec un liquide d'amortissement et qu'un deuxième volume partiel (1b) de l'espace intérieur du tube amortisseur (1) peut être rempli avec un gaz, et sachant que ledit amortisseur à gaz sous pression est doté d'un système de régulation du niveau du véhicule automobile, qui est actionné par un gaz sous pression, **caractérisée en ce que** le système de régulation du niveau du véhicule automobile est doté d'un conteneur (4) séparé, dont l'espace intérieur est divisé, par un piston de séparation (5) déplaçable, en un premier espace partiel (6), qui peut être rempli de liquide d'amortissement, et en un deuxième espace partiel (7), qui peut être rempli de gaz, le premier espace partiel (6) étant relié au premier volume partiel (1a) du tube amortisseur (1) et le deuxième espace partiel (7) étant raccordé à une source de gaz sous pression de sorte que, par amenée ou évacuation du gaz sous pression dans, respectivement hors du deuxième espace partiel (7) du conteneur (4), le gaz sous pression puisse monter ou descendre dans le deuxième volume partiel (1b) tube amortisseur (1), et, de ce fait, le niveau du véhicule automobile puisse être élevé ou abaissé.

6. Jambe de force à ressort selon la revendication 5, **caractérisée en ce que** le piston de séparation est étanchéifié, sur sa périphérie, par rapport à la paroi intérieure du conteneur (4).

7. Jambe de force à ressort selon la revendication 5 ou 6, **caractérisée en ce que** le conteneur (4) est fixé sur le tube amortisseur (1).

8. Jambe de force à ressort selon l'une des revendications 5 à 7, **caractérisée en ce que** le système de régulation du niveau du véhicule automobile comprend des moyens, qui permettent d'évacuer du gaz sous pression hors du conteneur (4) séparé.
